# EUROPÄISCHE PATENTSCHRIFT

(11) **EP 2 227 382 B1**
(45) Veröffentlichungstag und Bekanntmachung des Hinweises auf die Patenterteilung: **28.12.2011**
(21) Anmeldenummer: 08853697.4
(22) Anmeldetag: 28.10.2008
(51) Int. Cl.: B29D 29/00, B60C 1/00, C08K 3/04, C08L 7/00, C08L 9/00

(54) **KAUTSCHUKMISCHUNG MIT VERBESSERTER REISSEIGENSCHAFT UND VERBESSERTEM ABRIEB**
RUBBER MIXTURE HAVING IMPROVED RUPTURE PROPERTY AND IMPROVED WEAR
MÉLANGE CAOUTCHOUTEUX PRÉSENTANT UNE MEILLEURE RÉSISTANCE AUX CRAQUELURES ET À L'USURE

(30) Priorität: 01.12.2007 DE 102007057955
(43) Veröffentlichungstag der Anmeldung: 15.09.2010
(73) Patentinhaber: Continental Reifen Deutschland GmbH, 30165 Hannover (DE)
(72) Erfinder: WEBER, Christian, 30826 Garbsen (DE); KRAMER, Thomas, 31832 Springe (DE); CARL, Wilfried, 12159 Berlin (DE); HAUFE, Matthias, 31535 Neustadt (DE)
(74) Vertreter: Finger, Karsten
(86) Internationale Anmeldenummer: PCT/EP2008/064587
(87) Internationale Veröffentlichungsnummer: WO 2009/068392

(56) Entgegenhaltungen:
- EP-A- 0 794 073
- EP-A- 0 989 161
- EP-A- 1 052 165
- EP-A- 1 120 335
- EP-A- 1 452 344
- EP-A- 1 614 711
- JP-A- 2000 198 517
- US-A1- 2003 080 618
- US-A1- 2004 037 993

## Beschreibung

Die Erfindung betrifft eine Kautschukmischung, insbesondere für Fahrzeugluftreifen, Gurte und Riemen.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt. So ist eine Verbesserung der Rissbeständigkeit des Reifens in der Regel mit einem erhöhten Wärmeaufbau und mit einem schlechteren Abriebsverhalten des Reifens verbunden.

Zur Beeinflussung der Rissbeständigkeit ist es bekannt, insbesondere in Kautschukmischungen für LKW-Laufstreifen, neben der Zugabe von verschiedenen weiteren Füllstoffen noch zusätzlich nicht angebundene Kieselsäure hinzuzufügen. Dies wirkt sich allerdings wie bereits beschrieben nachteilig auf den Wärmeaufbau und das Abriebsverhalten aus.

Zum Stand der Technik sind folgende Druckschriften zu würdigen:
(D1) KR 20040091169 A
(D2) JP 2005336303 A
(D3) JP 8073657 A
(D4) EP 1593528 A1
(D5) DE 69823479 T2
(D6) JP 200239452 A
(D7) JP 2003012860 A

D1 beschreibt eine Kautschukmischung für die Seitenwand von LKW-Reifen mit verbessertem Ermüdungsverhalten und verbesserter Ozonschutzfähigkeit. Die Kautschukmischung enthält eine Kombination von Butadienkautschuk und Naturkautschuk im Verhältnis 30 ∼ 70 / 70 ∼ 30 und 45 - 50 Gewichtsanteile Ruß mit einer Iodabsorptionszahl im Bereich von 64 - 70 m²/g und einer DPB- Zahl im Bereich von 115 - 225 m² /100g. Weiterhin enthält sie 2,5 - 8 Gewichtsanteile Kieselsäure mit 0,4 - 1,2 Gewichtsanteilen eines Kieselsäurebinders.

Aus D2 ist ein Fahrzeugluftreifen enthaltend eine Kautschukmischung mit verbessertem Abriebsverhalten, verbessertem Nassgriff und geringem Wärmeaufbau enthaltend 30 - 80 Gewichtsanteile Naturkautschuk und 20 - 70 Gewichtsanteile Butadienkautschuk und / oder Styrolbutadienkautschuk bekannt. Des Weiteren enthält die Kautschukmischung 40 - 60 Gewichtsanteile Füllstoff, wovon 30 - 70 Gewichtsprozent Kieselsäure sind, und 5 - 20 Gewichtsprozent eines Kieselsäurebinders.

D3 beschreibt einen Fahrzeugluftreifen mit verbessertem Abrieb, verbesserter Alterungsbeständigkeit, verbessertem Nassgriff und verbessertem Verhalten auf Eis und Schnee. Der Fahrzeugluftreifen enthält eine Laufstreifenmischung enthaltend 60 phr oder weniger Ruß mit einer Stickstoffoberfläche von 120 m²/g oder höher und 5 - 40 phr Kieselsäure und 80 Gewichtsprozent oder mehr Naturkautschuk und Butadienkautschuk. Des Weiteren enthält die Kautschukmischung einen niedermolekularen, flüssigen Dienkautschuk.

Ein Fahrzeugreifen mit verbessertem Rollwiderstand, verbesserten Handlingeigenschaften und verbessertem Abriebsverhalten ist aus D4 bekannt. Der Reifen enthält eine Kautschukmischung enthaltend 55 - 98 phr Naturkautschuk, 2 - 45 phr Butadienkautschuk mit einem Molekulargewicht kleiner 200000 g/mol, 0 - 20 phr zumindest eines weiteren Dienkautschuks und 30 - 120 phr Füllstoff enthaltend 30 - 120 phr Ruß und 0 - 60 phr amorphes, synthetisches Silika. Eine Silankupplungsagens ist ebenso enthalten und der Ruß ist ganz oder zum Teil mit Silika oberflächenbehandelt.

In der D5 wird eine Kautschukmischung bereit gestellt, die eine Verbesserung des Rollwiderstandes ohne Beeinflussung der Abriebsbeständigkeit und Nassgriffigkeit ermöglicht. Das Kautschukgemisch umfasst wenigstens zwei verschiedene Copolymere, einen ersten Verstärkerfüllstoff auf Rußbasis mit einer DBP-Zahl von wenigstens 110ml/100g und einem zweiten Verstärkerfüllstoff auf Kieselerde-Basis in einer Menge, bei der die Summe aus erstem und zweitem Verstärkerfüllstoff zwischen 50 und 100 phr liegt und beide in der Polymerbasis gleichmäßig verteilt sind.

D6 beschreibt eine abriebsbeständige Kautschukmischung, die 100 Gewichtsanteile Naturkautschuk und / oder synthetischen Dienkautschuk, 10 Gewichtsanteile Kieselsäure, 0 - 90 Gewichtsanteile Ruß und 2 - 10 Gewichtsanteile Ester und Fettsäure enthält.

D7 offenbart eine Kautschukmischung mit exzellentem Abriebsverhalten, guter Verarbeitbarkeit und guten Reißeigenschaften. Die Kautschukmischung enthält 35 - 90 phr natürlichen und / oder synthetischen Naturkautschuk, 10 - 65 phr Butadienkautschuk, 45 - 60 phr Ruß, 2 - 10 phr Kieselsäure und 2 -10 phr modifizierten flüssigen Butadienkautschuk.

Der Erfindung liegt die Aufgabe zu Grunde, eine Kautschukmischung, insbesondere für Fahrzeugluftreifen, Gurte und Riemen, bereitzustellen, die eine weitere Verbesserung hinsichtlich des Konfliktes zwischen Rissbeständigkeit, Wärmeaufbau und Abrieb bewirkt.

Gelöst wird diese Aufgabe durch eine Kautschukmischung mit folgender Zusammensetzung:
- 50 - 95 phr zumindest eines natürlichen oder synthetischen Polyisoprens und
- 5 - 50 phr zumindest eines Butadienkautschuks und
- 0 - 30 phr zumindest eines Styrolbutadienkautschuks und
- 0 - 45 phr zumindest eines weiteren polaren oder unpolaren Kautschuks und
- 1,5 - 7,5 phr amorphe Kieselsäure und / oder Fällungskieselsäure und
- 25 - 80 phr zumindest eines Rußes mit einer Iodzahl zwischen 80 - 300 g / kg und einer DBP-Zahl zwischen 115 - 200 cm³ /100g und
- 0,1 - 5 phr zumindest eines Weichmacheröls und
- 2 - 100 phr weitere Zusatzstoffe.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise wurde gefunden, dass durch die Kombination von obig beschriebenem Polymersystem mit Hochstruktur-Ruß und geringe Mengen an Kieselsäure, die nicht oder nur teilweise durch ein geeignetes Silankupplungsagens angebunden sind, sich die Rissbeständigkeit verbessert, der Abriebswert auf dem gleichen Niveau verbleibt oder sich sogar verbessert und der Rollwiderstand, d.h. der Wärmeaufbau, nur geringfügig zunimmt. Dadurch ist es möglich den Zielkonflikt zwischen Weiterreißwiderstand und Abrieb zu entkoppeln. Dies gilt nicht nur für den Fahrzeuglaufstreifen, sondern auch für weitere innere Reifenbauteile. Die Kautschukmischungen für die weiteren inneren Reifenbauteile werden im Folgenden zusammengefasst, und wie in der Reifentechnologie üblich, auch als body compounds oder body-Mischungen bezeichnet.

Weitere Anwendung findet die erfindungsgemäße Kautschukmischung in der Mischungsentwicklung für Riemen und Gurte, insbesondere für Fördergurte.
Im täglichen Einsatz unterliegt insbesondere die Laufseite von Fördergurten starken mechanischen Beanspruchungen, z. B. bei Umlenkung an Antriebs-, Umlenk- und / oder Knicktrommeln und Aushalten der auftretenden Zugkräfte. Daher sind die Alterungs- und Abriebsbeständigkeit sowie der Weiterreißwiderstand bei gleich bleibenden weiteren viskoelastischen Eigenschaften, wie z.B. der Rückprallelastizität, zur Sicherung einer langen Lebensdauer von großer Bedeutung.

Die Kautschukmischung enthält 50 - 95 phr, bevorzugt 65 - 95 phr, zumindest eines natürlichen oder synthetischen Polyisoprens und 5 - 50 phr, bevorzugt 5 - 30 phr, zumindest eines Butadienkautschuks und 0 - 30 phr, bevorzugt 0 -15 phr, zumindest eines Styrolbutadienkautschukes, der lösungspolymerisiert oder emulsionspolymerisiert sein kann, und 0 - 45 phr eines weiteren polaren oder unpolaren Kautschuks. Der Butadienkautschuk ist bevorzugt eine hoch-cis Butadienkautschuk mit einem cis-Anteil größer oder gleich 90%
Der polare oder unpolare Kautschuk ist dabei ausgewählt aus der Gruppe, bestehend aus Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer.
Insbesondere Styrol-Isopren-Butadien-Terpolymer, Butylkautschuk, Halobutylkautschuk oder Ethylen-Propylen-Dien-Kautschuk kommen bei der Herstellung von Fördergurten zum Einsatz.

Die erfindungsgemäße Kautschukmischung enthält 1,5 - 7,5 phr, bevorzugt 3 - 7 phr, amorphe Kieselsäure und / oder Fällungskieselsäure. Von dieser Gesamtmenge an Kieselsäure können 0 - 7,5 phr durch ein Kupplungsagens, bevorzugt Silan, an die Polymermatrix angebunden werden und / oder 0 - 7,5 phr nicht an die Polymermatrix angebunden werden. Dies bedeutet, dass, ausgehend von der Gesamtmenge an Kieselsäure, diese durch das Kupplungsagens vollständig oder nur teilweise an die Polymermatrix angebunden wird oder keinerlei Anbindung der Kieselsäure an die Polymermatrix erfolgt.

Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.
Erfindungsgemäß werden Kieselsäuren mit einer Stickstoff-Oberfläche zwischen 120 und 240 m²/g, bevorzugt zwischen 150 und 200 m²/g, und einer CTAB-Oberfläche zwischen 120 und 230 m²/g, bevorzugt zwischen 140 und 200 m²/g, eingesetzt.

Falls ein Kupplungsagens in Form von Silan verwendet wird, so beträgt die Menge des Silans 0,1 - 3 phr, bevorzugt 0,5 - 2 phr. Als Silan-Kupplungsagenzien können dabei alle dem Fachmann für die Verwendung in Kautschukmischungen bekannten Silan-Kupplungsagenzien verwendet werden.
Das zusätzliche Einmischen von nicht angebundener Kieselsäure ist ein in der Kautschuktechnologie übliches Verfahren, um die Reißeigenschaften von Kautschukmischungen, insbesondere der für LKW-Laufstreifen, zu verbessern. Nachteilig wirkt sich dies allerdings auf den Wärmeaufbau in der betreffenden Kautschukmischung aus, was sich in einer geringen Rückprallelastizität zeigt. Dies drückt sich insbesondere in Kautschukmischungen für Laufstreifen für Fahrzeugreifen als erhöhter Rollwiderstand aus. Die Verwendung von angebundener Kieselsäure führt zu einer geringeren Optimierung der Reißeigenschaften, gleichzeitig aber auch zu einem geringeren Wärmeaufbau.
Zur Verbesserung des Rollwiderstandes ist daher der Einsatz von angebundener Kieselsäure sinnvoll, während für Kautschukmischungen mit verbesserten Reißeigenschaften der Einsatz von nicht angebundener Kieselsäure sinnvoll ist. Eine Kombination aus geringen Mengen angebundener und nicht angebundener Kieselsäure führt zu einer Kompromisslösung, so dass sich dadurch die genannten Zielkonflikte steuern lassen.

Erfindungswesentlich ist, dass die Kautschukmischung zumindest einen Hochstruktur-Ruß enthält. Die Menge des Rußes beträgt 25 - 80 phr, bevorzugt 30 - 55 phr. Der Ruß hat dabei eine Iodzahl, gemäß ASTM D 1510, die auch als Iodabsorptionszahl bezeichnet wird, zwischen 80 und 300 g / kg und eine DBP-Zahl, zwischen 115 und 200 cm³ / 100g. Bevorzugt hat der Ruß eine Iodzahl zwischen 80 und 160 g / kg und eine DBP-Zahl zwischen 115 und 160 cm³ / 100g. Besonders bevorzugt liegt die Iodzahl des Rußes zwischen 80 und 160 g / kg und die DBP-Zahl zwischen 115 und 140 cm³ / 100g. Die DBP-Zahl gemäß ASTM D 2414 bestimmt das spezifische Absorptionsvolumen eines Rußes oder eines hellen Füllstoffes mittels Dibutyl-phthalat.
Die Verwendung eines solchen Rußtypes in der Kautschukmischung gewährleistet eine Verbesserung des Abriebverhaltens und entschärft somit den Zielkonflikt zwischen Reißeigenschaften, Abrieb und Rollwiderstand.

Die erfindungsgemäße Kautschukmischung enthält weiterhin 0,1 - 5 phr zumindest eines Weichmacheröls, wobei das Weichmacheröl ein Mineralöl ist, das ausgewählt ist aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

Es können in der Kautschukmischung noch 0 - 5 phr zumindest eines weiteren zusätzlichen Weichmachers vorhanden sein. Dieser weitere Weichmacher kann ein synthetischer Weichmacher und / oder eine Fettsäure und / oder ein Fettsäurederivat und / oder ein Harz und / oder ein Faktis sein.

Die Gesamtmenge an Weichmachern beträgt dabei weniger oder gleich 10 phr. Erst mit dieser geringen Gesamtmenge an Weichmachern wird in der Kombination mit obig beschriebenem Hochstruktur-Ruß die gewünschte Verbesserung der Rissbeständigkeit, des Abriebverhaltens und des Wärmeaufbaus der Kautschukmischung erhalten.

Des Weiteren enthält die Kautschukmischung noch weitere Zusatzstoffe.
Weitere Zusatzstoffe beinhaltet im Wesentlichen das Vernetzungssystem (Vernetzer, Beschleuniger und Verzögerer), Ozonschutzmittel, Alterungsschutzmittel, Mastikationshilfsmittel und Aktivatoren.

Der Mengenanteil der Gesamtmenge an weiteren Zusatzstoffen beträgt 2 bis 100 phr, bevorzugt 3 bis 80 phr und besonders bevorzugt 5 - 60 phr.

Die Vulkanisation der Kautschukmischung wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer und Vulkanisationsaktivatoren in den üblichen Mengen enthalten, die erfindungsgemäß in den obig beschriebenen Zusatzstoffen enthaltend sind.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, obig beschriebene Kautschukmischung, zur Herstellung von Fahrzeugluftreifen, insbesondere zur Herstellung des Laufstreifens eines Reifens und / oder einer Body-Mischung eines Reifens und zur Herstellung von Riemen und Gurten zu verwenden.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Die Erfindung soll nun anhand von Vergleichs- und Ausführungsbeispielen, die in Tabellen 1 und 2 zusammengefasst sind, näher erläutert werden. Tabelle 3 stellt die Charakteristika der verwendeten Rußtypen dar.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte bei Raumtemperatur gemäß DIN 53 505
- Rückprallelastizität bei Raumtemperatur gemäß DIN 53 512
- Spannungswerte bei 100 % Dehnung bei Raumtemperatur gemäß DIN 53 504
- Zugfestigkeit bei Raumtemperatur gemäß DIN 53 504
- Reißdehnung bei Raumtemperatur gemäß DIN 53 504
- Ermüdungsrissbeständigkeit als Anzahl der Lastwechsel bis zum Bruch einer hantelförmigen Probe unter einem sich ständig wiederholenden Dehnungszyklus mit einer Frequenz von 104 ± 8 min⁻¹, bestimmt mit einem Monsanto Fatique to Failure Tester (abgekürzt: FTF) bei 136 % Dehnung und 60°C
- Reißenergie bei Raumtemperatur gemäß DIN 53 448
- Weiterreißwiderstand nach Graves bei Raumtemperatur gemäß DIN 53 515
- Abrieb nach Grosch gemäß Grosch, K.A., the 131 th ACS Rubber Div. Meeting, No. 97 (1987) und Grosch, K.A. et al., Kautschuk Gummi Kunststoffe, 50, 841 (1997)

**Tabelle 1**

| **Bestandteile** | **Einheit** | **A*** | **B*** | **C*** | **D*** | **E*** | **F** | **G** | **H*** | **I*** |
|---|---|---|---|---|---|---|---|---|---|---|
| Polyisopren | phr | 85 | 100 | 70 | 85 | 85 | 85 | 85 | 85 | 85 |
| Butadienkautschuk | phr | 15 | -- | 30 | 15 | 15 | 15 | 15 | 15 | 15 |
| Kieselsäure | phr | 6 | 6 | 6 | -- | 15 | 6 | 6 | 6 | 6 |
| Silan | phr | -- | -- | -- | -- | -- | -- | -- | -- | 1,5 |
| N220 - Ruß | phr | 45 | 45 | 45 | 45 | 45 | -- | -- | -- | 42 |
| N121 - Ruß | phr | -- | -- | -- | -- | -- | 45 | -- | -- | -- |
| N339 - Ruß | phr | -- | -- | -- | -- | -- | -- | 45 | -- | -- |
| N115 - Ruß | phr | -- | -- | -- | -- | -- | -- | -- | 45 | -- |

| | | | | | | | | | | |
|---|---|---|---|---|---|---|---|---|---|---|
| * Vergleichsbeispiele | | | | | | | | | | |

**Tabelle 2**

| **Eigenschaften** | **Einheit** | **A** | **B** | **C** | **D** | **E** | **F** | **G** | **H** | **I** |
|---|---|---|---|---|---|---|---|---|---|---|
| Härte bei RT | ShoreA | 60,5 | 59,4 | 61 | 59,9 | 58,6 | 61,6 | 59,7 | 60,3 | 60,4 |
| Rückprall bei RT | % | 48,7 | 45,3 | 49,6 | 52,3 | 43,9 | 48,1 | 51,1 | 47,5 | 53,3 |
| Spannungswert 300% | MPa | 11,8 | 11,7 | 11,6 | 12,3 | 9,8 | 12,4 | 12,1 | 11,5 | 11,3 |
| | | | | | | | | | | |
| Zugfestigkeit bei RT | MPa | 21,3 | 21,2 | 20,4 | 22,8 | 19,7 | 22,1 | 21,3 | 21,7 | 21,9 |
| Reißdehnung bei RT | % | 507 | 521 | 501 | 544 | 499 | 521 | 556 | 514 | 521 |
| | | | | | | | | | | |
| FTF (Mittelwert) | x 1000 Zyklen | 41 | 38 | 31 | 44 | 61 | 35 | 39 | 36 | 40 |
| Reißenergie | MJ/m³ | 6,4 | 8,6 | 4,7 | 4,3 | 7,7 | 5,6 | 5,6 | 6,9 | 6 |
| Graves | N/mm | 98 | 102 | 94 | 73 | 101 | 105 | 102 | 103 | 99 |
| | | | | | | | | | | |
| Abrieb | mm³ | 100 | 88 | 114 | 98 | 99 | 122 | 101 | 94 | 102 |

**Tabelle 3**

| **Ruß** | Iod-Zahl mg/g | DBP-Zahl cm³/100g |
|---|---|---|
| N115 | 160 | 113 |
| N121 | 121 | 132 |
| N220 | 121 | 114 |
| N339 | 90 | 120 |

Ein Vergleich der Kautschukmischung A mit den Kautschukmischungen B und C zeigt, dass sich durch eine Anhebung des Mengenanteils an Butadienkautschuk von B über A nach C das Abriebsverhalten deutlich verbessert. Der Rollwiderstand, dargestellt durch den Rückprall bei RT, zeigt sich für die Beispiele A und C, welche Anteile Butadienkautschuk enthalten, geringfügig verbessert. Bezüglich der Rissbeständigkeit, die aus der Kombination von Ermüdungsrissbeständigkeit, Weiterreißwiderstand und der Reißenergie ermittelt wird, zeigen die Kautschukmischungen A und B vergleichsweise die besten Ergebnisse. Insofern erscheint die Mischung A bedingt durch guten Rollwiderstand und durch gute Reißeigenschaften vorteilhaft gegenüber den beiden Mischungen B und C.

Ein Vergleich der Kautschukmischungen D, A und E ergibt, dass die Veränderung des Gehaltes an Kieselsäure lediglich einen als gering einzustufenden Einfluss auf das Abriebsverhalten hat. Der Rollwiderstand verschlechtert sich mit steigendem Gehalt an Kieselsäure. Bezüglich der Reißeigenschaften erscheint sich diese zunächst mit höherem Kieselsäureanteil zu verbessern. Zu berücksichtigen ist hierbei allerdings der niedrige Spannungswert und die geringe Härte der Kautschukmischung E, so dass sich in diesem Vergleich die Mischung A bezüglich der Reißeigenschaften als vorteilhafter zeigt.

Ein Vergleich der Mischungen A, F, G und H zeigt den Einfluss von unterschiedlichen Rußtypen auf das physikalische Verhalten der entsprechenden Kautschukmischung dar. Hierbei wurde Ruß-N220 (Mischung A) zu gleichen Teilen durch Ruß-N121 (Mischung F), Ruß-N115 (Mischung G) und durch Ruß-N339 (Mischung H) ersetzt. Dabei zeigt sich durch Kautschukmischung F ein Vorteil bezüglich des Abriebsverhaltens, während das weitere physikalische Verhalten auf annähernd gleichem Niveau verbleibt. Gleiches gilt für Mischung H hinsichtlich eines verbesserten Rollwiderstandes. Die in den Kautschukmischungen F und H verwendeten Ruße haben eine DBP-Zahl größer oder gleich 120 cm³ / 100g.

Die Verwendung von teilweise angebundener Kieselsäure, wie sie in Mischung I dargestellt wird, zeigt den bereits beschriebenen Effekt hinsichtlich der Reißeigenschaften und des Abriebwertes. Die Verwendung von Hochaktiv-Ruß verhindert in diesem Fall allerdings überraschenderweise, dass sich der Zielkonflikt zwischen Abrieb und Reißeigenschaften extrem verschlechtert.

Der Zielkonflikt zwischen Abrieb, Reißeigenschaften und auch Rollwiderstand kann also durch die Kombination von Polyisopren und Butadienkautschuk mit nicht angebundener, teilweise angebundener oder vollständig angebundener Kieselsäure und einem oder mehreren hochaktiven (DBP-Zahl ≥ 120 cm³ / 100g) Rußtypen auf ein höheres Niveau angehoben werden. Wichtig ist hierbei zu erwähnen, dass die Menge an Weichmacher, in Form von Öl, entsprechend gering sein muss.
Das Hinzufügen von weiteren, bereits erwähnten, zusätzlichen Kautschuken hat auf dieses Verhalten keinen Einfluss, wenn mindestens 50 phr Polyisopren in der Mischung vorliegen und dieses die Hauptkomponente in der Polymermatrix darstellt.

## Patentansprüche

1. Kautschukmischung, **gekennzeichnet durch** folgende Zusammensetzung:
- 50 - 95 phr zumindest eines natürlichen oder synthetischen Polyisoprens und
- 5 - 50 phr zumindest eines Butadienkautschuks und
- 0 - 30 phr zumindest eines Styrolbutadienkautschuks und
- 0 - 45 phr zumindest eines weiteren polaren oder unpolaren Kautschuks und
- 1,5 - 7,5 phr amorphe Kieselsäure und / oder Fällungskieselsäure und
- 25 - 80 phr zumindest eines Rußes mit einer Iodzahl zwischen 80 - 300 g / kg und einer DBP-Zahl zwischen 115 - 200 cm³ /100g
- 0,1 - 5 phr zumindest eines Weichmacheröls und
- 2 - 100 phr weitere Zusatzstoffe.

2. Kautschukmischung nach Anspruch 1, **dadurch gekennzeichnet, dass** sie 65 - 95 phr zumindest eines natürlichen oder synthetischen Polyisoprens enthält.

3. Kautschukmischung nach Anspruch 1 oder 2, **dadurch gekennzeichnet, dass** sie 5 - 30 phr zumindest eines Butadienkautschuks enthält.

4. Kautschukmischung nach einem der Ansprüche 1 bis 3, **dadurch gekennzeichnet, dass** sie 3 - 7 phr amorphe Kieselsäure und / oder Fällungskieselsäure enthält.

5. Kautschukmischung nach einem der Ansprüche 1 bis 4, **dadurch gekennzeichnet, dass** von der Gesamtmenge an Kieselsäure 0 - 7,5 phr Kieselsäure durch ein Kupplungsagenz an die Polymermatrix angebunden sind.

6. Kautschukmischung nach einem der Ansprüche 1 bis 4, **dadurch gekennzeichnet, dass** von der Gesamtmenge an Kieselsäure 0 - 7,5 phr Kieselsäure nicht an die Polymermatrix angebunden sind.

7. Kautschukmischung nach einem der Ansprüche 1 bis 6, **dadurch gekennzeichnet, dass** die Menge des Rußes 30 - 55 phr beträgt.

8. Kautschukmischung nach einem der Ansprüche 1 bis 7, **dadurch gekennzeichnet, dass** der Ruß eine Iodzahl zwischen 80 und 160 g / kg und eine DBP-Zahl zwischen 115 und 160 cm³ / 100g hat.

9. Kautschukmischung nach einem der Ansprüche 1 bis 8, **dadurch gekennzeichnet, dass** das Weichmacheröl ein Mineralöl ist.

10. Kautschukmischung nach Anspruch 9, **dadurch gekennzeichnet, dass** das Mineralöl ausgewählt ist aus der Gruppe, bestehend aus DAE und / oder RAE und / oder TDAE und / oder MES und / oder naphtenische Öle.

11. Verwendung einer Kautschukmischung nach einem der Ansprüche 1 bis 10 zur Herstellung eines Reifens.

12. Verwendung einer Kautschukmischung nach Anspruch 11 zur Herstellung des Laufstreifens eines Reifens.

13. Verwendung einer Kautschukmischung nach Anspruch 11 zur Herstellung einer Body-Mischung eines Reifens.

14. Verwendung einer Kautschukmischung nach Anspruch 13 zur Herstellung einer Body-Mischung eines Reifens, beinhaltend Seitenwand, Innenseele, Apex, Gürtel, Schulter, Gürtelprofil, Squeege, Karkasse, Wulstverstärker und / oder Bandage.

15. Verwendung einer Kautschukmischung nach einem der Ansprüche 1 bis 10 zur Herstellung eines Gurtes oder Riemens.

## Claims

1. Rubber mixture, **characterized by** the following constitution:
- from 50 to 95 phr of at least one natural or synthetic polyisoprene and
- from 5 to 50 phr of at least one butadiene rubber and
- from 0 to 30 phr of at least one styrenebutadiene rubber and
- from 0 to 45 phr of at least one other polar or non-polar rubber and
- from 1.5 to 7.5 phr of amorphous silica and/or precipitated silica and
- from 25 to 80 phr of at least one carbon black with an iodine number from 80 to 300 g/kg and a DBP number from 115 to 200 cm³/100 g
- from 0.1 to 5 phr of at least one plasticizer oil and
- from 2 to 100 phr of other additives.

2. Rubber mixture according to Claim 1, **characterized in that** it comprises from 60 to 95 phr of at least one natural or synthetic polyisoprene.

3. Rubber mixture according to Claim 1 or 2, **characterized in that** it comprises from 5 to 30 phr of at least one butadiene rubber.

4. Rubber mixture according to any of Claims 1 to 3, **characterized in that** it comprises from 3 to 7 phr of amorphous silica and/or precipitated silica.

5. Rubber mixture according to any of Claims 1 to 4, **characterized in that**, of the entire amount of silica, from 0 to 7.5 phr of silica have been coupled via a coupling agent to the polymer matrix.

6. Rubber mixture according to any of Claims 1 to 4, **characterized in that**, from the entire amount of silica, from 0 to 7.5 phr of silica have not been coupled to the polymer matrix.

7. Rubber mixture according to any of Claims 1 to 6, **characterized in that** the amount of the carbon black is from 30 to 55 phr.

8. Rubber mixture according to any of Claims 1 to 7, **characterized in that** the carbon black has an iodine number from 80 to 160 g/kg and a DBP number from 115 to 160 cm³/100 g.

9. Rubber mixture according to any of Claims 1 to 8, **characterized in that** the plasticizer oil is a mineral oil.

10. Rubber mixture according to Claim 9, **characterized in that** the mineral oil has been selected from the group consisting of DAE and/or RAE and/or TDAE and/or MES and/or naphthenic oils.

11. Use of a rubber mixture according to any of Claims 1 to 10 for producing a tyre.

12. Use of a rubber mixture according to Claim 11 for producing the tread of a tyre.

13. Use of a rubber mixture according to Claim 11 for producing a body mixture of a tyre.

14. Use of a rubber mixture according to Claim 13 for producing a body mixture of a tyre, including sidewall, inner liner, apex, belt, shoulder, belt profile, squeegee, carcass, bead reinforcement, and/or solid tyre.

15. Use of a rubber mixture according to any of Claims 1 to 10 for producing a drive belt or other belt.

## Revendications

1. Mélange de caoutchouc, **caractérisé par** la composition suivante :
- 50 à 95 phr d'au moins un polyisoprène naturel ou synthétique, et
- 5 à 50 phr d'au moins un caoutchouc de butadiène, et
- 0 à 30 phr d'au moins un caoutchouc de styrène-butadiène, et
- 0 à 45 phr d'au moins un autre caoutchouc polaire ou non polaire, et
- 1,5 à 7,5 phr de silice amorphe et/ou de silice précipitée, et
- 25 à 80 phr d'au moins une suie ayant un indice d'iode compris entre 80 et 300 g/kg et un indice DBP compris entre 115 et 200 cm³/100 g,
- 0,1 à 5 phr d'au moins une huile plastifiante, et
- 2 à 100 phr d'additifs supplémentaires.

2. Mélange de caoutchouc selon la revendication 1, **caractérisé en ce qu'**il contient 65 à 95 phr d'au moins un polyisoprène naturel ou synthétique.

3. Mélange de caoutchouc selon la revendication 1 ou 2, **caractérisé en ce qu'**il contient 5 à 30 phr d'au moins un caoutchouc de butadiène.

4. Mélange de caoutchouc selon l'une quelconque des revendications 1 à 3, **caractérisé en ce qu'**il contient 3 à 7 phr de silice amorphe et/ou de silice précipitée.

5. Mélange de caoutchouc selon l'une quelconque des revendications 1 à 4, **caractérisé en ce que**, sur la quantité totale de silice, 0 à 7,5 phr de silice sont reliés par un agent de couplage à la matrice polymère.

6. Mélange de caoutchouc selon l'une quelconque des revendications 1 à 4, **caractérisé en ce que**, sur la quantité totale de silice, 0 à 7,5 phr de silice ne sont pas reliés à la matrice polymère.

7. Mélange de caoutchouc selon l'une quelconque des revendications 1 à 6, **caractérisé en ce que** la quantité de suie est de 30 à 55 phr.

8. Mélange de caoutchouc selon l'une quelconque des revendications 1 à 7, **caractérisé en ce que** la suie a un indice d'iode compris entre 80 et 160 g/kg et un indice DBP compris entre 115 et 160 cm³/100 g.

9. Mélange de caoutchouc selon l'une quelconque des revendications 1 à 8, **caractérisé en ce que** l'huile plastifiante est une huile minérale.

10. Mélange de caoutchouc selon la revendication 9, **caractérisé en ce que** l'huile minérale est choisie dans le groupe constitué par les DAE et/ou RAE et/ou TDAE et/ou MES et/ou les huiles naphténiques.

11. Utilisation d'un mélange de caoutchouc selon l'une quelconque des revendications 1 à 10 pour la fabrication d'un pneu.

12. Utilisation d'un mélange de caoutchouc selon la revendication 11 pour la fabrication de la bande de roulement d'un pneu.

13. Utilisation d'un mélange de caoutchouc selon la revendication 11 pour la fabrication d'un mélange de carcasse d'un pneu.

14. Utilisation d'un mélange de caoutchouc selon la revendication 13 pour la fabrication d'un mélange de carcasse d'un pneu, comprenant une paroi latérale, une âme interne, un bourrage sur tringle, une ceinture, un épaulement, un profilé de ceinture, une raclette, une carcasse, un renforcement de bourrelet et/ou un bandage.

15. Utilisation d'un mélange de caoutchouc selon l'une quelconque des revendications 1 à 10 pour la fabrication d'une sangle ou d'une courroie.
